# EUROPEAN PATENT SPECIFICATION

(11) **EP 2 360 087 B1**
(45) Date of publication and mention of the grant of the patent: **08.05.2013**
(21) Application number: 11151256.2
(22) Date of filing: 18.01.2011
(51) Int. Cl.: B62L 3/02

(54) **Hydraulic brake**
Hydraulische Bremse
Frein hydraulique

(30) Priority: 12.02.2010 TW 99203274 U
(43) Date of publication of application: 24.08.2011
(73) Proprietor: Lin, Chang Hui, Changhu (TW)
(72) Inventor: Lin, Chang Hui, Changhu (TW)
(74) Representative: Dufay, Nicolas Henri

(56) References cited:
- EP-A2- 1 398 259
- EP-A2- 1 693 244
- TW-U- M 390 914
- US-A1- 2008 116 025
- US-A1- 2010 224 740
- US-B1- 6 370 877

## Description

### BACKGROUND OF THE INVENTION

### Field of the Invention

The present invention relates to a hydraulic brake that can obtain a smooth brake and lower weight.

### Description of the Prior Art

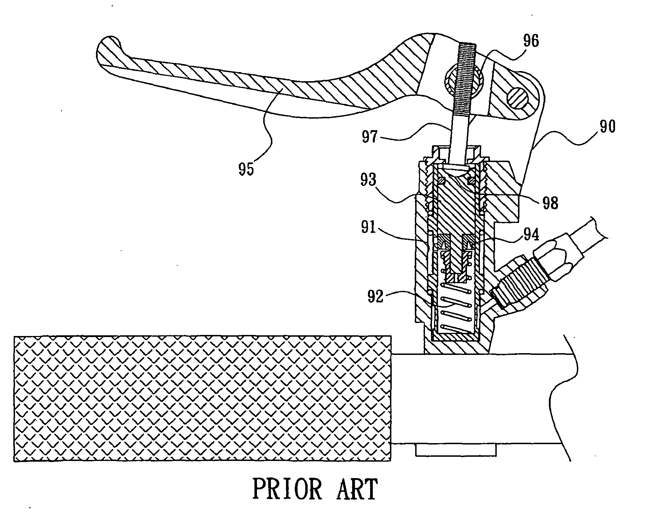

As shown in Fig. 1, a conventional handle structure used in a brake of a bicycle includes a body 90 integrally formed by a casting or forging method, and then the body 90 is drilled and milled by using a lathe. The body 90 includes a hydraulic cylinder 91 work formed therein, and the hydraulic cylinder includes a returning spring 92, a hydraulic piston 93, and a washer 94 installed therein, the body 90 includes a handle 95 disposed on a rear side thereof, an adjustable nut 97 and a push post 97 axially connected on a front side thereof, such that when the handle 95 is pressed, a head end 98 of the push post 97 is actuated to push the hydraulic piston 93, and then the hydraulic piston 93 pushes hydraulic oil in the hydraulic cylinder 91 to actuate a clamping and braking operation.

However, after the handle 95 of the body 90 is pressed, the push post 97 pushes the hydraulic piston 93, and then the push post 97 pushes the hydraulic cylinder at a certain angle. Because the push post 97 is axially connected on the handle 95, and between the push post 97 and the hydraulic cylinder 91 is defined a predetermined angle, transmitting power will lose to operate the brake dully. Moreover, the conventional handle structure includes many complicated components that have to be worked, increasing production cost. The preamble of claim 1 is based on US 2008116025.

The present invention has arisen to mitigate and/or obviate the afore-described disadvantages.

### SUMMARY OF THE INVENTION

The primary object of the present invention is to provide a hydraulic brake which is capable of overcoming the shortcomings of the conventional a hydraulic brake.

Another object of the present invention is to provide a hydraulic brake that after the handle of the two wheel vehicle is pressed, the hydraulic piston pushes hydraulic oil in an oil chamber directly, and then the hydraulic piston operates in the oil chamber, such that the hydraulic cylinder is micro-adjusted with a changing angle of the handle so that the hydraulic piston acts linearly, thus having a smooth brake and lowering weight.

The above objectives are obtained by a hydraulic brake as defined in claim 1.

### BRIEF DESCRIPTION OF THE DRAWINGS

Fig. 1 is a cross sectional view showing the assembly of a conventional hydraulic brake;
Fig. 2 is a perspective view showing the exploded components of a hydraulic brake according to a preferred embodiment of the present invention;
Fig. 3 is a perspective view showing the assembly of the hydraulic brake according to the preferred embodiment of the present invention;
Fig. 4 is a plan view showing the assembly of the hydraulic brake according to the preferred embodiment of the present invention;
Fig. 5 is a cross sectional view showing the operation of hydraulic brake according to the preferred embodiment of the present invention;
Fig. 6 is another cross sectional view showing the operation of hydraulic brake according to the preferred embodiment of the present invention.

### DETAILED DESCRIPTION OF THE PREFERRED EMBODIMENTS

The present invention will be clearer from the following description when viewed together with the accompanying drawings, which show, for purpose of illustrations only, the preferred embodiment in accordance with the present invention.

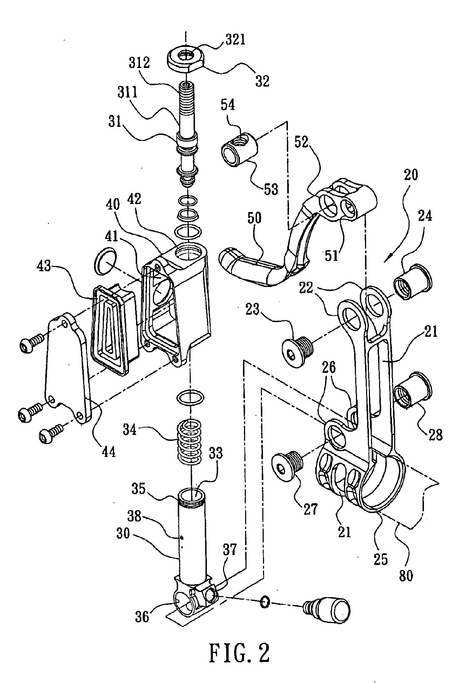

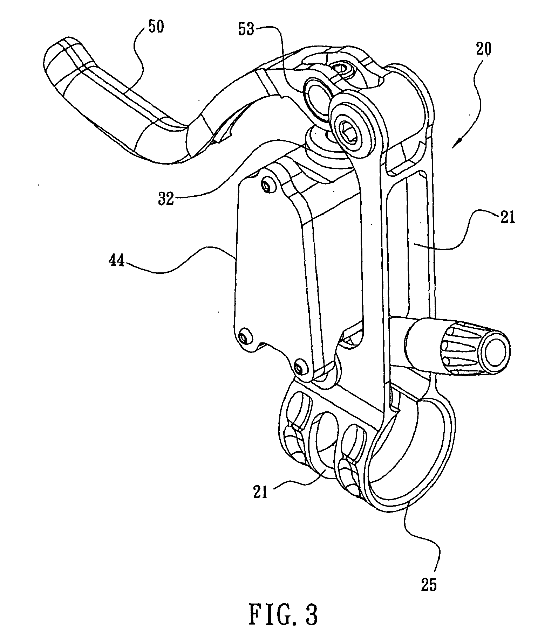

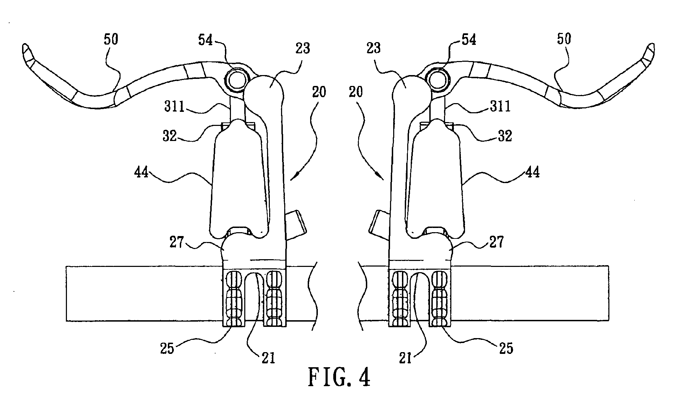

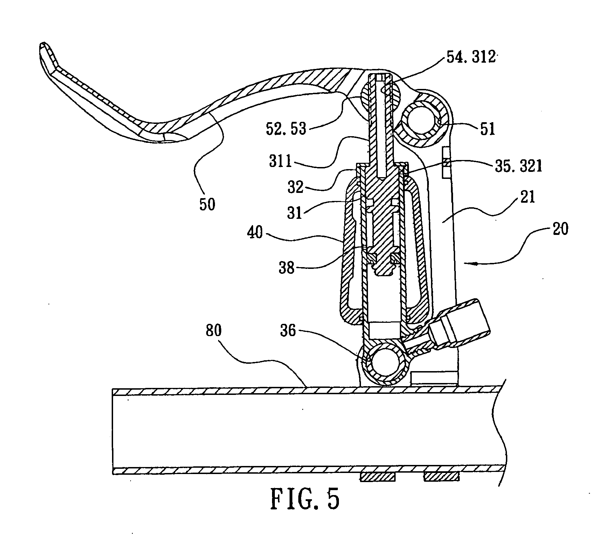

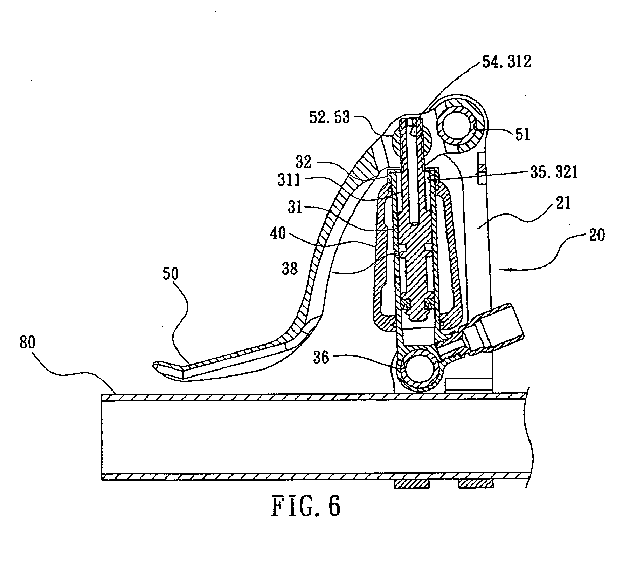

Referring to Figs. 1-6, a hydraulic brake in accordance with a preferred embodiment of the present invention is used to a handle 50 of a two wheel vehicle, and an adjustable nut 53 of the handle 50 is screwed with a connecting post 311 of a hydraulic piston 31, the hydraulic piston 31 is used to push hydraulic oil in an oil chamber 33 when the handle 50 is pressed by a user, wherein when the hydraulic piston 31 operates in the oil chamber 33, a hydraulic cylinder 30 is micro-adjusted with a changing angle of the handle 50 so that the hydraulic piston 31 acts linearly, thus having a smooth brake and lowering weight of the hydraulic brake.

The hydraulic brake comprises a body 20, the hydraulic cylinder 30, the hydraulic piston 31, a holder 40, the adjustable nut 53, and the handle 50, wherein the body 20 is integrally formed, includes a plurality of hollow portions 21 to lower weight, includes two first tabs 22 disposed on an upper side thereof, and each first tab 22 is inserted and screwed by a first screw 23 and a first nut 24 to axially connect the handle 50 onto the body 20; the handle 50 includes an axial hole 51 and a through bore 52 to receive the adjustable nut 53 arranged on a front end thereof, the adjustable nut 53 includes a screw aperture 54 formed on a middle section thereof to be screwed with first threads 312 of the connecting post 311 of the hydraulic piston 31; the body 20 also includes a retaining sleeve 25 and two second tabs 26 to be inserted by a second screw 27 and a second nut 28 so that the hydraulic cylinder 30 is axially connected with the body 20 and the body 20 is retained onto a grip 80; the hydraulic cylinder 30 includes the oil chamber 33 fixed on a central portion thereof and is fitted to the holder 40, the oil chamber 33 includes a returning spring 34 and the hydraulic piston 31 installed therein, and a positioning nut 32 having an orifice 321 is screwed with second threads 35 on a top end of the hydraulic cylinder 30 so that the hydraulic piston 31 is limited in the oil chamber 33 to operate and the holder 40 is not disengaged, the hydraulic cylinder 30 also includes an opening 36 mounted on a bottom end thereof, and the opening 36 includes an outlet 37 fixed on one side thereof to be coupled with the second tabs 26 of the body 20, the hydraulic cylinder 30 includes a plurality of mouths 38 secured on a middle section thereof to communicate with an oil cup 43; the holder 40 includes a receiving room 41 to receive the oil cup 43 and a pore 42 arranged thereon, and includes a cover 44 disposed to one side thereof and screwed with the oil cup 43 by using a plurality of screw elements, an outer diameter of the pore 42 of the holder 40 is equal to that of the hydraulic cylinder 30, and the pore 42 is used to receive the hydraulic cylinder 30 so that the hydraulic cylinder 30 is connected with the holder 40, the hydraulic piston 31 includes the connecting post 311 disposed on a rear end thereof, and the connecting post 311 includes the first threads 312 arranged thereon to screw the connecting post 311 with the orifice 321 of the positioning nut 32, such that the hydraulic brake is assembled to be operated smoothly and obtain a light weight.

While we have shown and described various embodiments in accordance with the present invention, it is clear to those skilled in the art that further embodiments may be made without departing from the scope of the present invention as defined by the appended claims.

## Claims

1. A hydraulic brake being used to a handle (50) of a two wheel vehicle and comprising:
a body (20),
a hydraulic cylinder (30),
a hydraulic piston (31),
a holder (40),
an adjustable nut (53), and
the handle (50) rotatably connected onto the body (20),
wherein the body (20) includes two first tabs (22) disposed on an upper side thereof, the adjustable nut (53) includes a screw aperture (54) formed on a middle section thereof to be screwed with first threads (312) of a connecting post (311) of the hydraulic piston (31), the body (20) includes a retaining sleeve (25), the hydraulic cylinder (30) includes an oil chamber (33) fixed on a central portion thereof and is fitted to the holder (40), the holder (40) includes a receiving room (41) to receive an oil cup (43) and a pore (42) arranged thereon, and includes a cover (44) disposed to one side thereof, the hydraulic piston (31) is used to push hydraulic oil in the oil chamber (33) when the handle (50) is pressed by a user;
**characterized by** the fact that:
the handle (50) includes a hole (51) extending along the rotation axis of the handle (50) relative to the body (20) and a through bore (52) for receiving the adjustable nut (53),
the body (20) includes two second tabs (26) disposed on a bottom side thereof,
a positioning nut (32) having an orifice (321) is screwed with second threads (35) on a top end of the hydraulic cylinder (30) so that the hydraulic piston (31) is limited in the oil chamber (33) to operate and the holder (40) is engaged,
an outer diameter of the pore (42) of the holder (40) is equal to that of the hydraulic cylinder (30), the pore (42) is used to receive the hydraulic cylinder (30) so that the hydraulic cylinder (30) is connected with the oil cup (43), the hydraulic piston (31) includes the connecting post (311) disposed on a rear end thereof, and the connecting post (311) includes the first threads (312) arranged thereon to screw the connecting post (311) with the orifice (321) of the positioning nut (32);
wherein when the hydraulic piston (31) operates in the oil chamber (33), the hydraulic cylinder (30) is micro-adjusted with a changing angle of the handle (50) so that the hydraulic piston (31) acts linearly.

2. The hydraulic brake as claimed in claim 1, wherein the body (20) is integrally formed, includes a plurality of hollow portions (21) to lower weight.

3. The hydraulic brake as claimed in claim 1, wherein each first tab (22) is inserted and screwed by a first screw (23) and a first nut (24) to axially connect the handle (50) onto the body (20).

4. The hydraulic brake as claimed in claim 1, wherein the retaining sleeve (25) and the second tabs (26) of the body (20) are inserted by a second screw (27) and a second nut (28) so that the hydraulic cylinder (30) is axially connected with the body (20) and the body (20) is retained onto a grip (80).

5. The hydraulic brake as claimed in claim 1, wherein the oil chamber (33) includes a returning spring (34) and the hydraulic piston (31) installed therein.

6. The hydraulic brake as claimed in claim 1, wherein the hydraulic cylinder (30) includes an opening (36) mounted on a bottom end thereof, and the opening (36) includes an outlet (37) fixed on one side thereof to be coupled with the second tabs (26) of the body (20).

7. The hydraulic brake as claimed in claim 1, wherein the hydraulic cylinder (30) includes a plurality of mouths (38) secured on a middle section thereof to communicate with the oil cup (43).

8. The hydraulic brake as claimed in claim 1, wherein the cover (44) is disposed to one side of the holder (40) and screwed with the oil cup (43) by using a plurality of screw elements.

## Patentansprüche

1. Hydraulische Bremse, die an einem Hebelgriff (50) eines Zweiradfahrzeugs verwendet wird und Folgendes umfasst:
einen Körper (20),
einen Hydraulikzylinder (30),
einen Hydraulikkolben (31),
einen Halter (40),
eine einstellbare Mutter (53) und
wobei der Hebelgriff (50) drehbar mit dem Körper (20) verbunden ist,
wobei der Körper (20) zwei erste Laschen (22) aufweist, die an einer Oberseite davon angeordnet sind, die einstellbare Mutter (53) eine Schrauböffnung (54) aufweist, die an einem mittleren Abschnitt davon ausgebildet ist, um mit ersten Windungen (312) eines Verbindungsstabs (311) des Hydraulikkolbens (31) verschraubt zu werden, der Körper (20) eine Festhaltehülse (25) aufweist, der Hydraulikzylinder (30) eine Ölkammer (33) aufweist, die an einem mittigen Abschnitt davon befestigt ist, und an dem Halter (40) angebracht ist, der Halter (40) einen Aufnahmeraum (41) zum Aufnehmen eines Ölers (43) und einen daran angeordneten Port (42) aufweist, und eine Abdeckung (44) aufweist, die an einer Seite davon angeordnet ist, der Hydraulikkolben (31) verwendet wird, um Hydrauliköl in die Ölkammer (33) zu drücken, wenn der Hebelgriff (50) von einem Benutzer gedrückt wird;
**dadurch gekennzeichnet, dass**:
der Hebelgriff (50) eine Bohrung (51) aufweist, die entlang der Drehachse des Hebelgriffs (50) relativ zum Körper (20) verläuft, und eine Durchgangsbohrung (52) zum Aufnehmen der einstellbaren Mutter (53),
der Körper (20) zwei zweite Laschen (26) aufweist, die an einer Unterseite davon angeordnet sind,
eine Positioniermutter (32), die eine Öffnung (321) aufweist, mit zweiten Windungen (35) an einem oberen Ende des Hydraulikzylinders (30) verschraubt ist, sodass der Hydraulikkolben (31) in der Ölkammer (33) eingegrenzt ist, um zu arbeiten, und in den Halter (40) eingegriffen wird,
ein Außendurchmesser des Ports (42) des Halters (40) dem des Hydraulikzylinders (30) entspricht, der Port (42) verwendet wird, um den Hydraulikzylinder (30) aufzunehmen, sodass der Hydraulikzylinder (30) mit dem Öler (43) verbunden ist, der Hydraulikkolben (31) den Verbindungsstab (311) aufweist, der an einem hinteren Ende davon angeordnet ist, und der Verbindungsstab (311) die ersten Windungen (312) aufweist, die daran angeordnet sind, um den Verbindungsstab (311) mit der Öffnung (321) der Positioniermutter (32) zu verschrauben;
wobei wenn der Hydraulikkolben (31) in der Ölkammer (33) arbeitet, der Hydraulikzylinder (30) mit einem sich ändernden Winkel des Hebelgriffs (50) mikroverstellbar ist, sodass sich der Hydraulikkolben (31) linear bewegt.

2. Hydraulische Bremse nach Anspruch 1, wobei der Körper (20) einteilig ausgebildet ist, eine Vielzahl von hohlen Abschnitten (21) aufweist, um das Gewicht zu verringern.

3. Hydraulische Bremse nach Anspruch 1, wobei jede erste Lasche (22) mit einer ersten Schraube (23) und einer ersten Mutter (24) eingesetzt und verschraubt ist, um den Hebelgriff (50) axial mit dem Körper (20) zu verbinden.

4. Hydraulische Bremse nach Anspruch 1, wobei die Haltehülse (25) und die zweiten Laschen (26) des Körpers (20) von einer zweiten Schraube (27) und einer zweiten Mutter (28) eingesetzt sind, sodass der Hydraulikzylinder (30) axial mit dem Körper (20) verbunden ist und der Körper (20) an einem Griff (80) festgehalten ist.

5. Hydraulische Bremse nach Anspruch 1, wobei die Ölkammer (33) darin eingebaut eine Rückstellfeder (34) und den Hydraulikkolben (31) aufweist.

6. Hydraulische Bremse nach Anspruch 1, wobei der Hydraulikzylinder (30) eine Öffnung (36) aufweist, die an einem unteren Ende davon angebracht ist, und die Öffnung (36) einen Auslass (37) aufweist, der an einer Seite davon befestigt ist, um mit den zweiten Laschen (26) des Körpers (20) verbunden zu werden.

7. Hydraulische Bremse nach Anspruch 1, wobei der Hydraulikzylinder (30) eine Vielzahl von Löchern (38) aufweist, die an einem mittleren Abschnitt davon befestigt sind, um mit dem Öler (43) in Verbindung zu stehen.

8. Hydraulische Bremse nach Anspruch 1, wobei die Abdeckung (44) auf einer Seite des Halters (40) angeordnet ist und unter Verwendung einer Vielzahl von Schraubelementen mit dem Öler (43) verschraubt ist.

## Revendications

1. Frein hydraulique utilisé sur une manette (50) d'un véhicule à deux roues et comprenant :
un corps (20),
un cylindre hydraulique (30),
un piston hydraulique (31),
un support (40),
un écrou réglable (53), et
la manette (50) reliée à rotation sur le corps (20),
le corps (20) comprenant deux premières pattes (22) disposées sur un côté supérieur de celui-ci, l'écrou réglable (53) comprenant une ouverture taraudée (54) formée sur une section médiane de celui-ci pour être vissée sur les premiers filets (312) d'un montant de liaison (311) du piston hydraulique (31), le corps (20) comprenant un manchon de retenue (25), le cylindre hydraulique (30) comprenant une chambre d'huile (33) fixée sur une partie centrale de celui-ci et étant adapté au support (40), le support (40) comprenant une chambre de réception (41) pour recevoir un collecteur d'huile (43) et un orifice (42) agencé sur celui-ci, et comprenant un couvercle (44) disposé sur un côté de celui-ci, le piston hydraulique (31) étant utilisé pour pousser de l'huile hydraulique dans la chambre d'huile (33) lorsque la manette (50) est pressée par un utilisateur ;
**caractérisé par le fait que** :
la manette (50) comprend un trou (51) s'étendant le long de l'axe de rotation de la manette(50) par rapport au corps (20) et un alésage traversant (52) pour recevoir l'écrou réglable (53),
le corps (20) comprend deux secondes pattes (26) disposées sur un côté inférieur de celui-ci,
un écrou de positionnement (32) ayant un orifice (321) est vissé sur des seconds filets (35) sur une extrémité supérieure du cylindre hydraulique (30) de telle sorte que le fonctionnement du piston hydraulique (31) est limité dans la chambre d'huile (33) et le support (40) est engagé,
un diamètre externe de l'orifice (42) du support (40) est égal à celui du cylindre hydraulique (30), l'orifice (42) étant utilisé pour recevoir le cylindre hydraulique (30) de telle sorte que le cylindre hydraulique (30) est relié au collecteur d'huile (43), le piston hydraulique (31) comprenant le montant de liaison (311) disposé sur une extrémité arrière de celui-ci et le montant de liaison (311) comprenant les premiers filets (312) agencés sur celui-ci pour visser le montant de liaison (311) à l'orifice (321) de l'écrou de positionnement (32) ;
dans lequel, lorsque le piston hydraulique (31) fonctionne dans la chambre d'huile (33), le cylindre hydraulique (30) est micro-ajusté avec un angle changeant de la manette (50) de telle sorte que le piston hydraulique (31) agit linéairement.

2. Frein hydraulique selon la revendication 1, dans lequel le corps (20) est formé d'un seul tenant, comprend une pluralité de parties creuses (21) pour diminuer le poids.

3. Frein hydraulique selon la revendication 1, dans lequel chaque première patte (22) est introduite et vissée par une première vis (23) et un premier écrou (24) pour relier axialement la manette (50) sur le corps (20).

4. Frein hydraulique selon la revendication 1, dans lequel le manchon de retenue (26) et les secondes pattes (26) du corps (20) sont introduits par une seconde vis (27) et un second trou (28) de telle sorte que le cylindre hydraulique (30) est relié axialement au corps (20) et le corps (20) est retenu sur une poignée (80).

5. Frein hydraulique selon la revendication 1, dans lequel la chambre d'huile (33) comprend un ressort de rappel (34) et le piston hydraulique (31) est installé dans celui-ci.

6. Frein hydraulique selon la revendication 1, dans lequel le cylindre hydraulique (30) comprend une ouverture (36) montée sur une extrémité inférieure de celui-ci, et l'ouverture (36) comprend une sortie (37) fixée sur un côté de celle-ci pour être couplée aux secondes pattes (26) du corps (20).

7. Frein hydraulique selon la revendication 1, dans lequel le cylindre hydraulique (30) comprend une pluralité de trous (38) pratiqués sur une section médiane de celui-ci pour communiquer avec le collecteur d'huile (43).

8. Frein hydraulique selon la revendication 1, dans lequel le couvercle (44) est disposé sur un côté du support (40) et vissé sur le collecteur d'huile (43) à l'aide d'une pluralité d'éléments de vissage.
